Europäisches Patentamt

European Patent Office

Office européen des brevets

(19)

(11) Veröffentlichungsnummer: **0 195 383**
**A2**

(12) **EUROPÄISCHE PATENTANMELDUNG**

(21) Anmeldenummer: **86103465.0**

(22) Anmeldetag: **14.03.86**

(51) Int. Cl.⁴: **F 24 H 6/00**

(30) Priorität: **18.03.85 DE 3509674**

(43) Veröffentlichungstag der Anmeldung:
**24.09.86 Patentblatt 86/39**

(84) Benannte Vertragsstaaten:
**AT BE CH DE FR IT LI LU NL SE**

(71) Anmelder: **Viessmann, Hans, Dr.**
**Im Hain**
**D-3559 Battenberg/Eder(DE)**

(72) Erfinder: **Viessmann, Hans, Dr.**
**Im Hain**
**D-3559 Battenberg/Eder(DE)**

(74) Vertreter: **Wolf, Günter, Dipl.Ing.**
**Patentanwälte Dipl.-Ing. Amthor Dipl.-Ing. Wolf Postfach**
**70 02 45 An der Mainbrücke 16**
**D-6450 Hanau 7(DE)**

(54) **Kondensatheizkessel.**

(57) Der Kondensatheizkessel besteht aus einem wasserführenden Gehäuse mit Brennkammer (17) und von dieser zur unten am Gehäuse angeordneten Kondensatsammelkammer (18) mit Gefälle geführten Wärmetauschflächen in Form von Heizgaskanälen (4). Um mit einem derartigen Kondensatheizkessel auch in Perioden höheren Wärmebedarfs eine sogenannte "Vollkondensation" erreichen zu können, ist der Kondensatheizkessel derart ausgebildet, daß zwischen dem wasserführenden Gehäuse (1) und der Kondensatsammelkammer (2) ein luftdurchströmbares Wärmetauschergehäuse (3) angeordnet ist. Dieses luftdurchströmbare Wärmetauschergehäuse (3) ist mit die Heizgaskanäle (4) des wasserführenden Gehäuses (1) fortsetzenden, zur Kondensatsammelkammer (2) führenden Heizgaskanälen (5) versehen.

Fig.1

Kondensatheizkessel                    (15 464 E)

Die Erfindung betrifft einen Kondensatheizkessel gemäß Oberbegriff des Hauptanspruches.

Kondensatheizkessel der genannten Art, die auch als sogenannte Brennwertkessel bezeichnet werden, sind inzwischen allgemein bekannt geworden (siehe bspw. DE-OS 32 38 603) und unterscheiden sich von "normalen" Heizkessel bezüglich ihrer
Betriebsweise dadurch, daß die Heizgase gezielt bis zur Kondensation heruntergekühlt werden, was voraussetzt, daß der
Rücklauf für derartige Heizkessel ausreichend niedrige Temperaturen haben muß, um die den unteren Bereich des Heizkessels
zuströmenden Heizgase entsprechend weit herunterkühlen zu
können. Der vom notwendigen Kondensatsammelraum derartiger
Kessel abgehende Abgasstutzen ist aufgrund einer solch starken Abkühlung der Heizgase praktisch nur noch handwar. Problematisch sind dabei jedoch Heizperioden mit hohem Wärmebedarf,
da in solchen Perioden der aus dem Heizkreis kommende Rücklauf, soweit dafür nicht andere Maßnahmen getroffen werden,
in der Regel nicht die entsprechend niedrige Temperatur hat,
d.h., eine sogenannte "Vollkondensation", die wünschenswert
ist, kann in solchen Perioden mit derartigen Kesseln praktisch nicht erreicht werden.

Der Erfindung liegt demgemäß die Aufgabenstellung zugrunde,
einen Kondensatheizkessel der eingangs genannten Art dahingehend zu verbessern, daß auch in Perioden mit hohem Wärmebedarf eine solche "Vollkondensation" erzielt werden kann.

Diese Aufgabe ist mit einem Kondensatheizkessel der eingangs
genannten Art nach der Erfindung durch die im Kennzeichen des
Hauptanspruches angeführten Merkmale gelöst. Vorteilhafte
Weiterbildungen ergeben sich nach den Unteransprüchen.

Diese erfindungsgemäße Ausbildung des Kondensatheizkessels nutzt vorteilhaft die Gegebenheit aus, daß in Perioden hohen
Wärmebedarfs Außenluft mit entsprechend niedrigen Temperaturen zur Verfügung steht, die beim erfindungsgemäß ausgebildeten Kondensatheizkessel diesem in geeigneter Weise zugeführt wird, da im Kessel zwischen den in höheren Bereichen
schon vorgekühlten Heizgasen und der zugeführten Außenluft
immer noch ein ausreichendes Temperaturgefälle besteht, das
für eine weitere Abkühlung und damit Kondensation der Heizgase sorgt. Da sich dabei die zugeführte kalte Außenluft entsprechend aufwärmt, besteht mit einem solchen erfindungsgemäßen Kondensatheizkessel die vorteilhafte Möglichkeit, diese aufgewärmte Außenluft ggf. mit geeigneten Mitteln den zu
beheizenden Räumen zusätzlich zuzuführen oder für andere
Zwecke auszunutzen.

Abgesehen von noch zu erläuternden, vorteilhaften Ausführungsformen für einen derartigen Kessel, der nach diesem Prinzip
insbesondere für kleinere Leistungsbereiche bestimmt ist, kann
der Kondensatheizkessel unter Beibehaltung der Zuordnung eines Luft-/Gas-Wärmetauschers derart weiter ausgebildet werden,
daß im Strömungsweg zwischen den Ausmündungen der Heizgaskanäle des wasserführenden Gehäuses und den Einmündungen der
Heizgaskanäle des Wärmetauschergehäuses für Luft ein weiterer
Wärmetauscher mit wasserdurchströmbaren und außen feingegliederter Wärmetauschflächen angeordnet ist. Da bei Heizkesseln
für größere Leistungsbereiche entsprechend große Wärmemengen
umzusetzen sind, ermöglicht diese Weiterbildungsform gewissermaßen eine stufenweise Wärmeumsetzung, wobei die relativ
grobgestaltete, der Brennkammer unmittelbar nachgeschaltete
Wärmetauschfläche die Verbrennungsgase mit hoher Temperatur
aufnimmt, wobei ca. 50 - 60 % der enthaltenen Wärme der Heizgase umgesetzt wird, ein Teil der Restwärme in der nachgeschalteten, bezüglich ihrer Oberfläche eingegliederten Wärmetauschfläche, die also keine sehr hohen Temperaturen verträgt, abgezogen wird, um schließlich die Restwärme weitestgehend im Luft-/Gas-Wärmetauscher an die Luft abzuführen und
um damit schließlich eine "Vollkondensation" zu erreichen.

Diese Aufdrittelung des ganzen Wärmetauschbereiches hat natürlich auch fertigungstechnische Vorteile für den Kessel selbst, da man im der Brennkammer unmittelbar nachgeschalteten ersten Drittel die Wärmetauschflächen relativ grob, d.h. einfach herstellbar, gestalten kann, für das zweite Drittel feingegliederte Wärmetauschelemente, also vorteilhaft bspw. sowieso verfügbare außenberippte Rohrregister einsetzen kann, um daran den vorbeschriebenen Luft-/Gas-Wärmetauscher und darunter den Kondensatsammelraum anzuschließen.

Nach dem DE-GM 19 09 760 ist es zwar bekannt, zwecks Lufterhitzung einer dem Feuerraum direkt nachgeschalteten rohrförmigen Nachschaltheizfläche, die von den Heizgasen durchströmt wird, im Querstrom Frischluft zuzuführen, hierbei handelt es sich aber nicht um einen Kondensatheizkessel, und ein Wärmeabzug aus den Heizgasen mit zwei unterschiedlichen Medien (Wasser/Luft) in Anpassung an deren gegebenen Temperaturen (relativ warmes Rücklaufwasser/relativ kalte Außenluft), ist damit weder funktionell noch apparativ möglich.

Der erfindungsgemäße Kondensatheizkessel wird nachfolgend anhand der zeichnerischen Darstellung von Ausführungsbeispielen näher erläutert.

Es zeigt schematisch

Fig. 1    einen Längsschnitt durch den erfindungsgemäßen Kondensatheizkessel;

Fig. 2    einen Schnitt durch die bevorzugte Ausführungsform eines Heizgaskessels;

Fig. 3    perspektivisch eine Luftführungstasche für den Luft-/Gas-Wärmetauscher;

Fig. 4    einen horizontalen Teilschnitt durch die Luftführungs- und Heizgasführungskanäle des Luft-/Gas-Wärmetauschers und

Fig. 5    einen Teilschnitt durch den Kondensatheizkessel
in besonderer Ausführungsform für größere Leistungsbereiche.

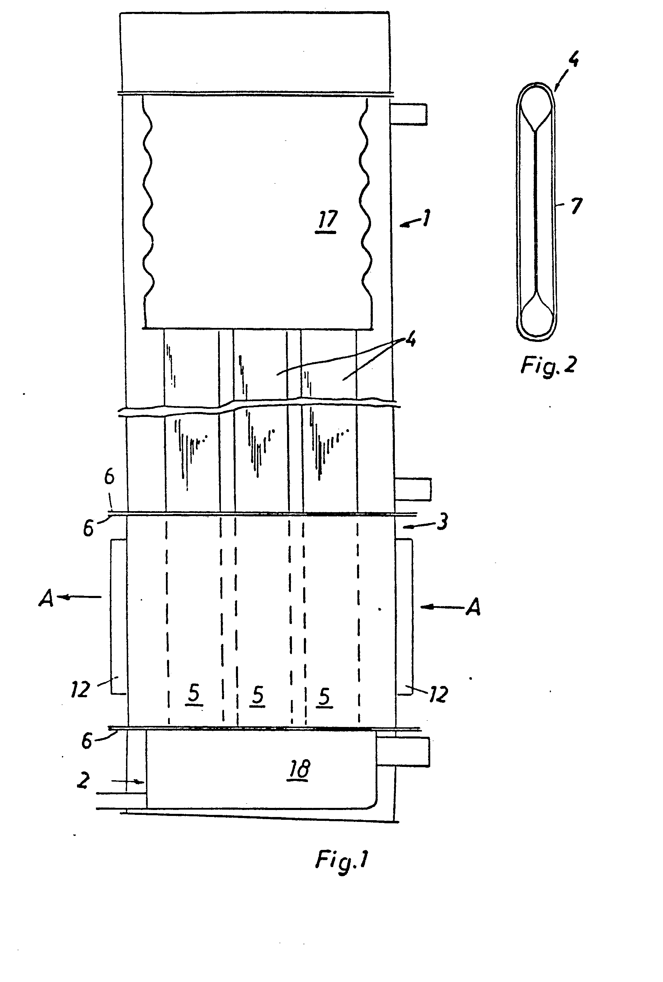

Wie aus Fig. 1 erkennbar, besteht der Kondensatheizkessel
aus einem wasserführenden Gehäuse 1 mit Brennkammer 17 und
von dieser zur unten am Gehäuse 1 angeordneten Kondensatsammelkammer 18 mit Gefälle geführten Wärmetauschfläche in Form
von Heizgaskanälen 4. Zwischen dem wasserführenden Gehäuse 1
und der Kondensatsammelkammer 2 ist das luftdurchströmbare
Wärmetauschergehäuse 3 angeordnet und zwar mit die Heizgaskanäle 4 des wasserführenden Gehäuses 1 fortsetzenden, zur
Kondensatsammelkammer 2 führenden Heizgaskanälen 5. Das wasserführende Gehäuse 1, das nachgeschaltete Wärmetauschergehäuse 3 und die Kondensatsammelkammer 2 sind dafür, um diese
Teile separat und damit einfach fertigen zu können, vorteilhaft mit abdichtbaren Anschlußflanschen 6 versehen.

Die Heizgaskanäle 4 des wasserführenden Gehäuses 1 und die
des Wärmetauschergehäuses 3 sind als im Querschnitt langlochförmige Taschen 7 ausgebildet, wobei die Taschen 7 beider Gehäuse 1, 3 beim Ausführungsbeispiel nach Fig. 1 fluchtend zueinander angeordnet sind, d.h., die Heizgasdurchströmten Taschen 7, die die Heizgaskanäle 5 des Luft-/Gas-Wärmetauschers
umschließen, setzen einfach die Heizgaskanäle 4 des wasserführenden Gehäuses 1 fort. Die Wärmetauschfläche des Wärmetauschergehäuses 3 kann aber auch derart ausgebildet werden,
daß die Heizgaskanäle 5 von Luftführungstaschen 8 begrenzt
sind, die sich quer zu den Taschen 7 des wasserführenden Gehäuses 1, das Wärmetauschergehäuse 3 durchgreifend, erstrekkend angeordnet sind. Dies hat den Vorteil, daß die Luftführungstaschen 8 mit ihren oberen Anströmflächen 9 den Ausmündungen der Taschen 7 des wasserführenden Gehäuses 1 mit Abstand gegenüberstehend angeordnet werden können, wodurch die
Strömungswege der Heizgase geknickt werden, was mit einer gewissen Umschichtung innerhalb des Gasstromes verbunden ist.
Die Luftführungstaschen, von denen eine perspektivisch in

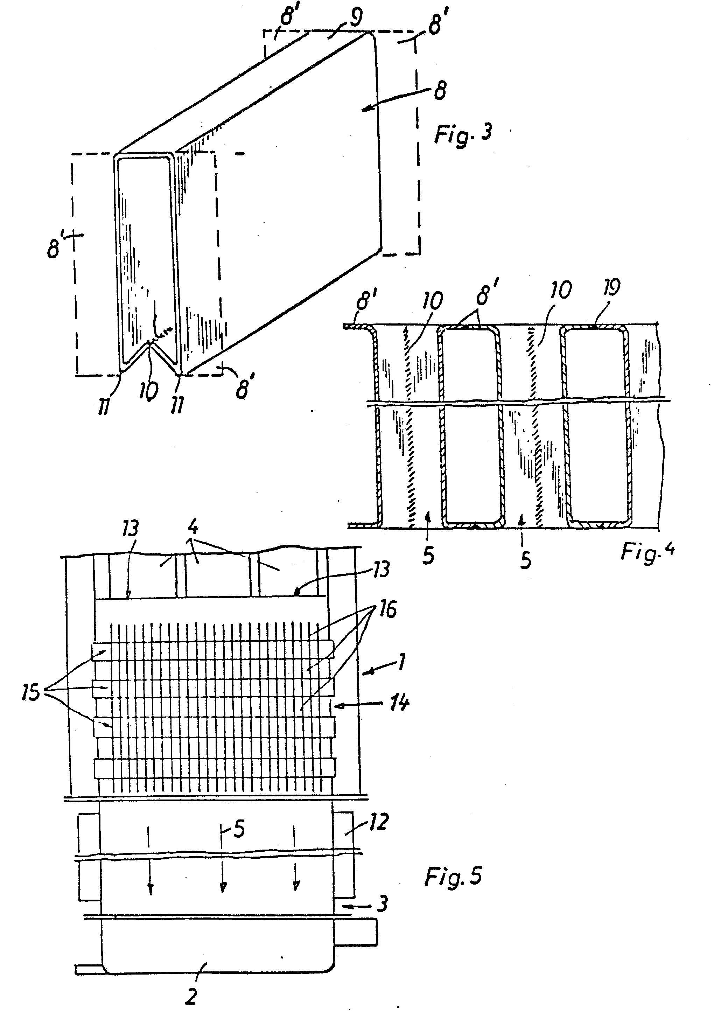

Fig. 3 dargestellt ist, müssen übrigens nicht das Wärmetauschergehäuse 3 in Richtung der Pfeile A (Fig. 1) durchgreifen, sondern können sich auch in Richtung senkrecht zur
Zeichnungsebene erstrecken.

Die Luftführungstaschen 8 des Luft-/Gas-Wärmetauschers sind
übrigens vorteilhaft aus einem einzigen Blechzuschnitt, wie
aus Fig. 3 erkennbar, U-förmig gebogen, weisen also anströmseitig keine Schweißnaht auf, sondern nur abströmseitig eine
Schließschweißnaht 10, die zusätzlich in Rücksicht auf das
ablaufende Kondensat höher angeordnet ist als die unteren
Randkanten 11 der Luftführungstasche 8. Dadurch kann das ablaufende Kondensat nicht an die Schließschweißnaht 10 gelangen. Diese Ausführungsform der Luftführungskanäle 8, die also bei entsprechend beabstandeter Nebeneinanderanordnung die
Heizgaskanäle 5 begrenzen, hat auch den Vorteil, daß man am
Blechzuschnitt abwinkelbare Randflächen 8' mit zuschneiden
kann, die beim Nebeneinanderreihen der Taschen 8 gegeneinanderstoßen und mit Längsschweißnähten 19 verbunden werden. Dadurch ist auf einfache Weise das wesentliche Teil des Luft-/
Gas-Wärmetauschers herstellbar, an das nur noch die Luftführungsanschlußstutzen 12 anzuschließen sind, an die (hier
nicht dargestellt) geeignete Luftführungsleitungen mit druck-
oder saugseitig integriertem Gebläse angeschlossen werden.

Das Ausführungsbeispiel nach Fig. 5 unterscheidet sich von
dem nach Fig. 1 nur dadurch, daß im Strömungsweg zwischen
den Ausmündungen 13 der Heizgaskanäle 4 des wasserführenden
Gehäuses 1 und den Einmündungen der Heizgaskanäle 5 (nur mit
Pfeilen angedeutet) ein weiterer Wärmetauscher 14 mit wasserdurchströmbaren und außen feingegliederter Wärmetauschfläche 15 angeordnet ist, welche Wärmetauschfläche 15 in
einfacher und vorteilhafter Weise in Form eines außenberippten Rohrregisters 16 aus kondensatfestem Material gebildet
ist. Im dargestellten Ausführungsbeispiel nach Fig. 5 ist
der weitere Wärmetauscher 14 als Teil des wasserführenden Gehäuses 1 ausgebildet, wobei die außen feinberippten Rohre des Rohrregisters 16 nach der einen oder anderen Seite leicht ansteigend eingebaut sind. Es ist natürlich auch möglich, den Wärmetauscher 14 als Teil des Wärmetauschergehäuses 3 auszubilden oder auch als in bezug auf das wasserführende Gehäuse 1 und das Wärmetauschergehäuse 3 abgedichtet zwischenflanschbares Gehäuseteil. Bevorzugt wird jedoch eine Integration des Wärmetauschers 14 in das wasserführende Gehäuse, wie dargestellt, da mit Überströmleitungen für den Wärmetauscher 14 zum wasserführenden Gehäuse 1 entbehrlich werden.

Andererseits hat die Ausbildung des Wärmetauschers 14 als separates Teil für den Hersteller natürlich den Vorteil und zwar im Gesamtzusammenhang gesehen, durch die beschriebene Aufgliederung des Gesamtkessels, gewissermaßen ein Baukastensystem zur Verfügung zu haben, dessen Einzelteile je nach Bedarf zusammengestellt werden können.

- 1 -

Patentansprüche:

1. Kondensatheizkessel, bestehend aus einem wasserführenden Gehäuse mit Brennkammer und von dieser zur unten am Gehäuse angeordneten Kondensatsammelkammer mit Gefälle geführten Wärmetauschflächen, d a d u r c h g e - k e n n z e i c h n e t , daß zwischen dem wasserführenden Gehäuse (1) und der Kodensatsammelkammer (2) ein luftdurchströmbares Wärmetauschergehäuse (3) angeordnet ist mit die Heizgaskanäle (4) des wasserführenden Gehäuses (1) fortsetzenden, zur Kondensatsammelkammer (2) führenden Heizgaskanälen (5).

2. Heizkessel nach Anspruch 1, d a d u r c h g e - k e n n z e i c h n e t , daß das wasserführende Gehäuse (1), das nachgeschaltete Wärmetauschergehäuse (3) und die Kondensatsammelkammer (2) mit abdichtbaren Anschlußflanschen (6) versehen sind.

3. Heizkessel nach Anspruch 1 oder 2, d a d u r c h g e - k e n n z e i c h n e t , daß die Heizgaskanäle (4) des wasserführenden Gehäuses (1) und die des Wärmetauschergehäuses (3) als im Querschnitt langlochförmige Taschen (7) ausgebildet und die Taschen (7) beider Gehäuse (1, 3) fluchtend zueinander angeordnet sind.

- 2 -

0195383

4. Heizkessel nach Anspruch 1 oder 2, d a d u r c h   g e -
k e n n z e i c h n e t ,   daß die Heizgaskanäle (4) des
wasserführenden Gehäuses (1) als im Querschnitt langlochförmige Taschen (7) ausgebildet und daß die Heizgaskanäle
(5) des Wärmetauschergehäuses (3) von Luftführungstaschen
(8) begrenzt sind, die sich quer zu den Taschen (7) des
wasserführenden Gehäuses (1), das Wärmetauschergehäuse (3)
durchgreifend, erstreckend angeordnet sind.

5. Heizkessel nach Anspruch 4, d a d u r c h   g e k e n n -
z e i c h n e t ,   daß die Luftführungstaschen (8) mit
ihren oberen Anströmflächen (9) den Ausmündungen der Taschen (7) des wasserführenden Gehäuses (1) mit Abstand gegenüberstehend angeordnet sind.

6. Heizkessel nach Anspruch 5, d a d u r c h   g e k e n n -
z e i c h n e t ,   daß die unten verlaufende Schließschweißnaht (10) der Luftführungstaschen (8) höher angeordnet ist als deren untere Randkanten (11).

7. Heizkessel nach einem der Ansprüche 1 bis 6, d a -
d u r c h   g e k e n n z e i c h n e t ,   daß das Wärmetauschergehäuse (3) in Luftdurchströmrichtung beidseitig mit Luftführungsanschlußstutzen (12) versehen sind.

8. Heizkessel nach einem der Ansprüche 1 bis 7, d a -
d u r c h   g e k e n n z e i c h n e t ,   daß im Strömungsweg zwischen den Ausmündungen (13) der Heizungskanäle (4) des wasserführenden Gehäuses (1) und den Einmündungen der Heizgaskanäle (5) des Wärmetauschergehäuses (3)
ein weiterer Wärmetauscher (14) mit wasserdurchströmbaren
und außen feingegliederter Wärmetauschfläche (15) angeordnet ist.

9. Heizkessel nach Anspruch 8, d a d u r c h   g e -
k e n n z e i c h n e t ,   daß der zwischengeschaltete
Wärmetauscher (14) in Form eines außenberippten Rohrregisters (16) aus kondensatfestem Material ausgebildet ist.

10. Heizkessel nach Anspruch 8 oder 9, d a d u r c h  g e - k e n n z e i c h n e t , daß der weitere Wärmetauscher (14) als Teil des wasserführenden Gehäuses (1) oder als Teil des Wärmetauschergehäuses (3) oder als in bezug auf das wasserführende Gehäuse (1) und das Wärmetauschergehäuse (3) abgedichtet zwischenflanschbares Gehäuseteil ausgebildet ist.

Fig.1

Fig.2

0195383

Fig. 3

Fig. 4

Fig. 5